# EUROPEAN PATENT SPECIFICATION

(11) **EP 2 220 550 B1**
(45) Date of publication and mention of the grant of the patent: **29.06.2011**
(21) Application number: 08854995.1
(22) Date of filing: 18.11.2008
(51) Int. Cl.: G06F 3/01, A63F 13/08, G05B 19/409

(54) **3D MOTION CONTROL SYSTEM AND METHOD**
3D-BEWEGUNGSSTEUERSYSTEM UND VERFAHREN
PROCÉDÉ ET SYSTÈME DE CONTRÔLE DE MOUVEMENT 3D

(30) Priority: 26.11.2007 US 945063
(43) Date of publication of application: 25.08.2010
(73) Proprietor: Massachusetts Institute of Technology, Cambridge, Massachusetts 02139 (US)
(72) Inventor: KUNZLER, Patrik, Cambridge, Massachusetts 02139 (US); MITCHELL, William, Cambridge, Massachusetts 02139 (US)
(74) Representative: Somervell, Thomas Richard
(86) International application number: PCT/US2008/083867
(87) International publication number: WO 2009/070468

(56) References cited:
- WO-A-03/098419
- WO-A-2006/119568
- US-A- 4 046 262
- US-A- 5 515 078
- US-A1- 2001 042 968
- US-A1- 2005 282 633

## Description

### BACKGROUND

Field

This disclosure relates to man-in-the-loop control systems and methods based on sensing three-dimensional motion of a human body.

Description of the Related Art

Systems controlled by a human operator are ubiquitous in modem society, and can be found in activities ranging from driving an automobile to playing video games. Within this description, such control systems will be termed "man-in-the-loop" control system to distinguish from fully automated closed loop control systems. Man-in-the-loop control systems generally utilize motions of a person's hands/arms and feet, such as turning the steering wheel and pressing the gas and break pedals when operating an automobile. Current man-in-the-loop control systems generally do not utilize movements of the operator's hips, pelvis, and torso for control purposes.

Some existing simulation systems, such as arcade motorcycle simulators are believed to sense the operator's weight distribution and thus effectively sense the position of the operator's body as a whole. However, it is believed that such simulation systems do not sense the movements or the positions of individual elements of the operator's hips, pelvis, and torso for control purposes.
WO 03/09849 discloses a system with means for sensing the pelvic angle of a user and controlling a cursor based on movements of the pelvis or lower back of said user. The sensing means comprise a chair whose seat comprises a convex part, which part can be movably accommodated in a corresponding part of the chassis having a complementary concave shape.

DESCRIPTION OF THE DRAWINGS

FIG. 1 is a diagram of a man-in-the-loop control system.

FIG. 2 is a diagram of a man-in-the-loop control system.

FIG. 3 is a diagram of a man-in-the-loop control system.

FIG. 4 is a block diagram of a man-in-the-loop control system.

FIG. 5 is a flow chart of a man-in-the-loop control system.

Throughout this description, elements appearing in figures are assigned three-digit reference designators, where the most significant digit is the figure number and the two least significant digits are specific to the element. An element that is not described in conjunction with a figure may be presumed to have the same characteristics and function as a previously-described element having a reference designator with the same least significant digits.

Definitions

The midsagittal plane (also called the median plane) is defined (Merriam Webster Medical Dictionary) as a vertical longitudinal plane that divides a bilaterally symmetrical animal, such as a person, into right and left halves. A coronal plane (also called a frontal plane) is defined as a plane parallel to the long axis of a body and at right angles to the midsagittal plane.

Some elements of the control system described herein are symmetrical about the midsagittal plane. The reference designators applied to these elements in the figures may include the suffixes "L" and "R" to indicate mirror-imaged left-side and right-side elements having the same function.

Within this description, the term "elastically coupled" will be used to indicate that a first element is joined to a second element with a flexible connection that defines and tends to restore a nominal positional relationship between the elements but allows relative motion in at least one direction.

Description of Apparatus

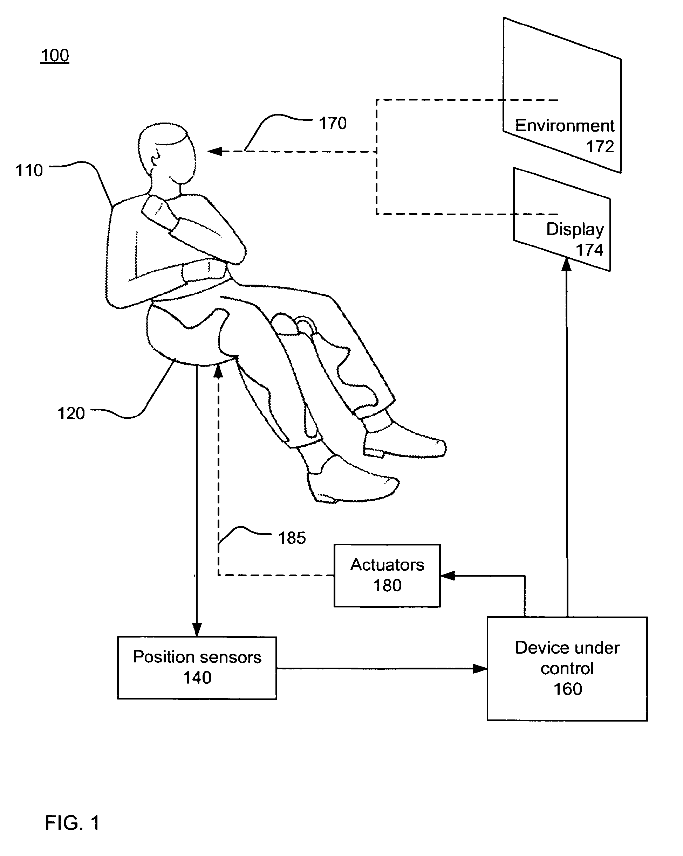

Referring now to FIG. 1, a man-in-the-loop control system 100 may include a person or operator 110, sensors 140, a device being controlled 160 in response to inputs from the sensors, and a feedback mechanism. The feedback mechanism may include a visual image 170, which may be a view of the environment 172 or an image formed on a display device 174. The feedback mechanism may also include physical feedback such as a force, vibration, or other tactile sensation applied to at least some portion of the operator 110. The physical feedback mechanism may be intrinsic, such as the force due to acceleration or cornering in an automobile, or may be introduced by one or more actuators 180. The actuators 180 may produce a force, vibration, or other tactile feedback 185 on one or more region of the operator's body. The feedback mechanism may also include audible feedback. The audible feedback may be intrinsic, such as engine and/or tire sounds in an automobile, or may be synthesized. The feedback mechanism may include other forms of feedback.

The sensors 140 may include any apparatus or device that measures the instantaneous position, instantaneous motion, rate of motion, cumulative motion, or other parameter of a portion of the operator's body. The sensors 140 may include conventional control devices such as the steering wheel (which measures the cumulative motion of the operator's hands) and pedals (which measure the instantaneous position of the operator's foot or feet) of an automobile, or a computer mouse (which measures the rate of linear motion of the operator's hand). The sensors 140 may also include known devices such as accelerometers, gyros, potentiometers, and photosensors to measure the position of the operator's body and limbs and/or the angles of the operator's joints.

The device under control may be a real apparatus such as a vehicle. The term vehicle, as used herein, includes automobiles, aircraft, motorcycles, boats, construction equipment or any other apparatus that moves under control of an operator. The device under control may be a computing device running an application program. The application program may be as a simulation or some other program. The application program may simulate a physical system or a physical activity such as driving an automobile or skiing. The objective of the simulation may be entertainment (such as a video game), training, testing, exercise, rehabilitation, or some other objective.

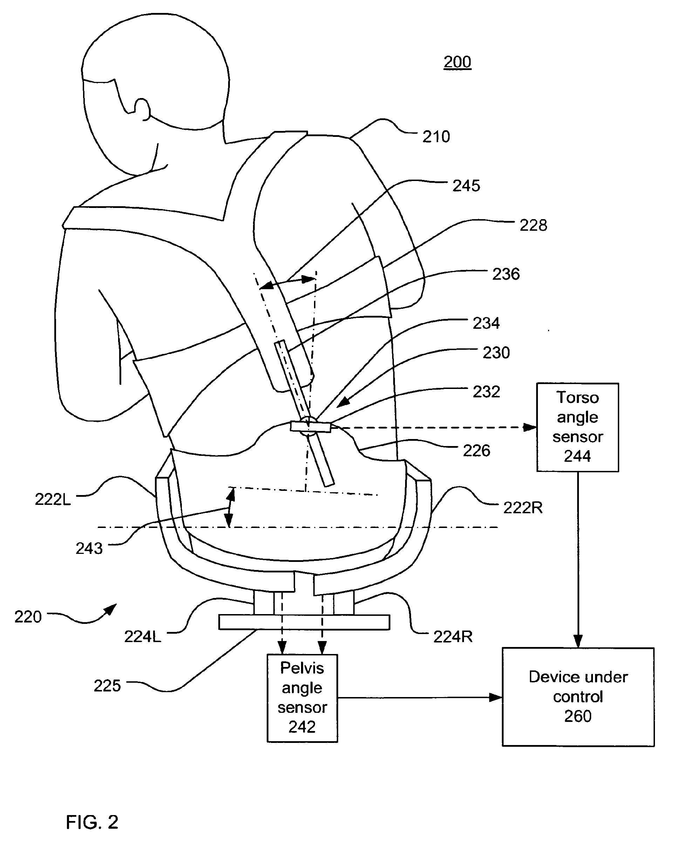

FIG. 2 is a block diagram of a man-in-the-loop control system including a seat 220 with a 3-D motion interface. The seat 220 may be the seat described in copending Patent Application No. 11/860,497 or another seat. The seat 220 may include a left seat 222L and a right seat 222R. Each of the left and right seats 222L/R may be supported by a corresponding suspension system 224L/R anchored to a common base 225. The left and right suspension systems 224L/R may allow motion along several axes. The suspension systems 224L/R may allow independent vertical motion of the left and right seats 222L/R, such that the operator's 210 pelvis may tilt with respect to the base 225, as indicated by arrow 243.

In FIG. 2, the base 225 is represented as a single structural member. However, the base 225 may include components and elements not shown in FIG. 1. The base 225 may be a chair base and may include a plurality of legs, casters, a swivel mechanism, and other structures. The base 225 may be movably or permanently attached to a vehicle. The base 225 may be any apparatus suitable to support the seat 220.

The seat 220 may include a lower back support such as lower back support 226. The lower back support 226 may be elastically coupled to the left seat 222L and the right seat 222R by flexible elements or some other mechanism that allows the lower back support to support the operator without inhibiting or preventing movement of the operator's 210 pelvis. The lower back support 226 may have a variety of shapes other than that illustrated in FIG. 2.

The seat 220 may include an upper back support 228. The upper back support 228 may be movably coupled to the lower back support 226. The movable coupling of the upper back 228 support to the lower back support 226 may allow free angular and linear motion of the upper back support 228 with respect to the lower back support 226. For example, the upper back support 228 may be movably coupled to the lower back support 226 by a telescoping ball-and-socket joint 230. The telescoping ball-and-socket joint may include a bushing/retainer 232 attached to the lower back support 226. A ball 234 may be free to rotate within the bushing/retainer 232. A shaft 236 may be attached to the upper back support 228. The shaft 236 may be free to move linearly through a bushing within the ball 234. The shaft 236 may move through the ball 234 when, for example, the operator 210 leans forward and backward. The telescoping ball and socket joint 230 may include soft or hard stops (not shown) to limit the rotation of the ball 234 and to limit the linear motion of the shaft 236. The telescoping ball and socket joint 230 may also include springs and/or damping mechanisms affecting either or both the rotational or linear motion.

The upper back support 228 may include side extensions that wrap, at least partially, around an occupant's torso under their arms. The upper back support may include upper extensions that may wrap, at least partially, over the top of the occupant's shoulders. The upper back support 228 may have a variety of shapes other than that illustrated in FIG. 2.

The control system 200 may include a pelvis angle sensor 242 to estimate the angle of the operator's 210 pelvis in a frontal plane (as indicated by arrow 243). The pelvis angle sensor 242 may measure the angle between the left and right seats 222L/R using an angle sensor such as a potentiometer or rotary optical encoder linked to the left and right seats 222L/R. The pelvis angle sensor may measure the vertical positions of the left and right seats 222L/R using a linear differential transformer, a linear optical encoder, or other position sensors and estimate the angle of the operator's pelvis from the difference in the vertical positions of the left and right seats 222L/R. The pelvis angle sensor 242 may use one or more accelerometers, gyros, linear differential transformers, optical sensors, acoustic sensors, or other sensors to estimate the operator' pelvis angle 243.

The control system 200 may include a torso angle sensor 244 to estimate the angle of the operator's 210 torso in a frontal plane (as indicated by arrow 245). The torso angle sensor may also measure the operator's torso angle in the sagital plane, which would be motion of the torso essential normal to the plane of FIG. 2. The torso angle sensor 243 may measure the angle 245 between the shaft 236 and the normal to the bushing/retainer 232. The shaft 236, the ball 234, and the bushing/retainer 232 may form a two-axis analog control directly analogous to the well-known joy stick. The torso angle sensor may additionally measure the rotational angle of the shaft 236 within the ball 234. The torso angle sensor 242 may use one or more potentiometers, accelerometers, gyros, linear differential transformers, optical sensors, acoustic sensors, or other sensors to estimate the angles of the operator's torso on one, two or three axis.

The positional information measured by the pelvis angle sensor 242 and the torso angle sensor 244 may be communicated to the device under control 260. The positional information may be communicated as analog signals, parallel digital signals, or serial digital signals. The communication path may be wired or wireless. The positional information may be communicated continuously or periodically (as is done for a conventional joystick or mouse). If the positional information is communicated periodically, the period must be sufficiently short to allow stable control of the device under control 260.

Portions of the seat may include buttons, switches, proximity sensors or other devices (not shown) that can receive input from the operator 210 not originating from the movement of the operator and/or the seat.

The device under control 260 may be a real apparatus such as an automobile, aircraft, construction equipment, wheelchair, or other vehicle. For example, the device under control may be a vehicle where the operator's pelvis angle, as measured by the pelvis angle sensor, and/or the operator's upper body rotation, as measured by the torso angle sensor, are used to control steering. Using the operator's body angles to control steering may leave the operator's hands and arms free for other tasks.

The device under control 260 may be a computing device running an application program which may be controlled, at least in part, by the sensed positional information. For example, the application program may be simulation of some physical system, and the positional information sensed by the pelvis angle sensor 242 and the torso angle sensor 244 may be used to control, at least in part, the simulation. For further example, the device under control 260 may be a video game (or training system) simulating motorcycle riding or racing. In this example, the device under control may be a computer running an application program that models the dynamics of a motorcycle and a rider and provides feedback to the operator via an image on a display device (not shown in FIG. 2). In this example, the positional informations sensed by the pelvis angle sensor 242 and the torso angle sensor 244 may be used to define the pelvis angle and torso angles, respectively, of the rider modeled by the computing device. The positional information sensed by the pelvis angle sensor 242 and the torso angle sensor 244 may be similarly used by simulations of other physical activity performed by a simulated person, such as driving cars or other vehicles, surfing, alpine skiing, cross country skiing, water skiing, and skate boarding.

All of portions of the seat 220 may be wearable such that all of portions of the seat 220 may remain attached to the operator 210 when the operator 210 exits the vehicle or other device under control. A wearable seat may physically or virtually connect to the vehicle or other device being controlled. A wearable seat may physically connect to a structure for support of the operator such as a vehicle, a stand or other support device. For example, referring to FIG. 2, the left and right seats 222L/R, the lower back support 226, and the upper back support 222 may be worn by the operator or otherwise attached to the operator. The left and right seats 222L/R may temporarily mechanically connect to the left and right suspension systems 224L/R, respectively, when the operator is positioned to control the device under control 260. The wearable portions of the seat may include the pelvis angle sensor 242 and/or torso angle sensor 244 which would communicate with the device under control 260 through a wired, optical, or wireless connection.

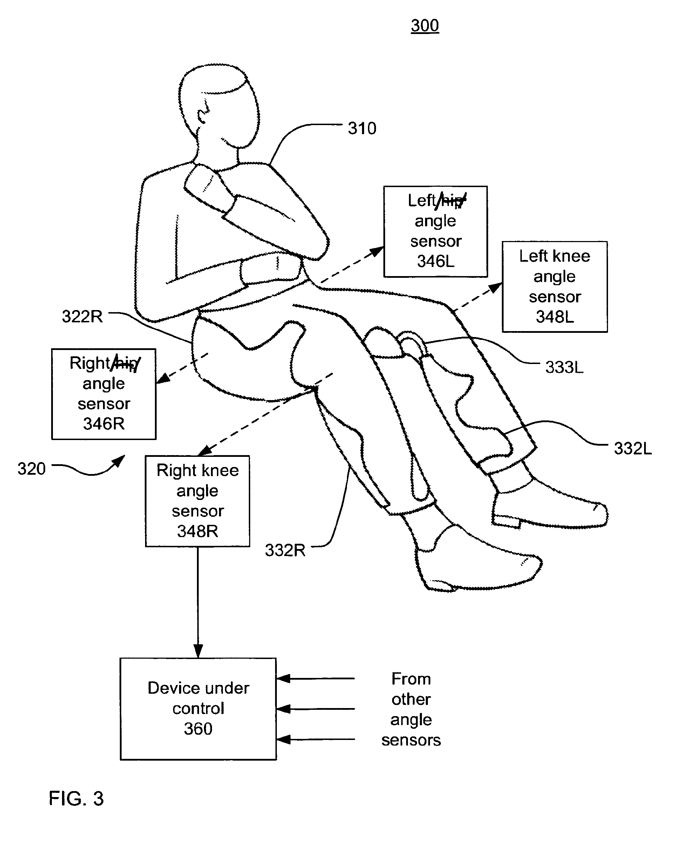

FIG. 3 is a block diagram of a man-in-the-loop control system including a seat 320 with a 3-D motion interface. The seat 320 may be the seat described in copending Patent Application No. 11/860,497 or another seat. The seat 320 may include a left seat 322L and a right seat 322R which may be movable along several axes. The seat 320 may provide for independent vertical motion of the left and right seats 322L/R, and may include lower and upper back supports, as described in conjunction with FIG. 2.

The seat 320 may allow independent rotation of the operator's thighs in elevation (raising and lowering the operator's thighs) and azimuth (opening and closing the operator's thighs). The seat 320 may also allow some amount of independent longitudinal roll of the operator's thighs and the left and right seats 322L/R about separate axes approximately parallel to the long dimension of each seat. The seat 320 may include left and right thigh angle sensors 346L/R to sense the angular position of each of the operator's thighs in one, two, or three dimensions. The thigh angle sensors 346L/R may use one or more potentiometers, accelerometers, gyros, linear differential transformers, optical sensors, acoustic sensors, or other sensors and combinations thereof to estimate the angles of the operator's thighs on one, two or three axis.

The seat 320 may include a left lower leg support 332L and a right lower leg support 332R. The left lower leg support 332L may be elastically coupled to the left seat 322L by a flexible element 333L located proximate to the inner side of the occupant's left knee. The right lower leg support 332R may be elastically coupled to the right seat 322R by a similar flexible element (not visible) located proximate to the inner side of the occupant's right knee. The right and left lower leg supports 332R/L may be elastically coupled to the right and left seats 322R/L, respectively by other mechanisms including flexible elements located on the outside of the occupant's knees, flexible elements on both the inside and outside of the occupants knees, hinges, hinges in combination with springs and/or dampers, and other mechanical structures. The left and right lower leg supports 332L/R may support and, to at least some degree, constrain an occupant's lower legs.

The seat may include left and right knee angle sensors 348L/R to sense the angles between the operator's lower legs and thighs. The knee angle sensors 348L/R may also sense the rotation of the operator's lower legs with respect to the operator's knees. The knee angle sensors 348L/R may use one or more potentiometers, accelerometers, gyros, linear differential transformers, optical sensors, acoustic sensors, or other sensors and combinations thereof to estimate the angles of the operator's knees on one or two axis.

The positional information measured by the thigh angle sensors 346L/R and the knee angle sensors 348L/R may be communicated to the device under control 360. The positional information may be communicated as analog signals, parallel digital signals, or serial digital signals. The communication path may be wired or wireless. The positional information may be communicated continuously or periodically (as is done for a conventional joystick or mouse). If the positional information is communicated periodically, the period must be sufficiently short to allow stable control of the device under control 360. The device under control 360 may also receive positional information from a pelvis angle sensor and a torso angle sensor (not shown in FIG. 3) as described in conjunction with FIG. 2.

The device under control 360 may be a real apparatus or may be a simulation of some system or activity. The device under control may be a simulation of a physical activity performed by a simulated person. For example, the device under control 360 may be a video game (or training system) simulating downhill skiing. In this example, the device under control may be a computer running an application program that models the dynamics of a skier and provides feedback to the operator via an image on a display device (not shown in FIG. 2). In this example, the positional information sensed by the thigh angle sensors 346L/R, the knee angle sensors 348L/R, a pelvis angle sensor 242 and a torso angle sensor 244 may be used to define the corresponding joint angles of the skier being modeled by the computing device. The positional information sensed by the hip angle sensors 346L/R, the knee angle sensors 348L/R, the pelvis angle sensor 242 and the torso angle sensor 244 may be similarly used by simulations of other physical activity such as driving cars or other vehicles, surfing, cross country skiing, water skiing, and skate boarding.

All of portions of the seat 320 may be wearable as previously described.

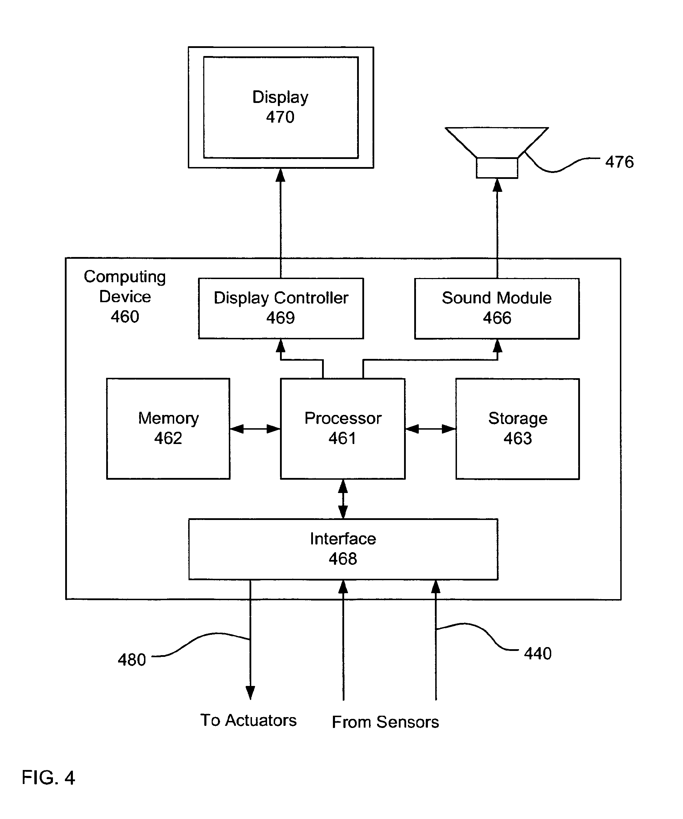

Referring now to FIG. 4, a computing device 460 to simulate a physical activity performed by a modeled person may include a processor 461 coupled to a memory 462, a storage device 463, a display controller 469, a sound module 466, and an interface 468. The computing device 460 may include software, firmware, and/or hardware for providing functionality and features described herein. The hardware and firmware components of the computing device 460 may include various specialized units, circuits, software and interfaces for providing the functionality and features described here. The processes, functionality and features may be embodied in whole or in part in software which operates on the processor 461 and may be in the form of firmware, an application program, an applet (e.g., a Java applet), a browser plug-in, a COM object, a dynamic linked library (DLL), a script, one or more subroutines, or an operating system component or service.

Although the computing device 460 may be implemented in a personal computer, the processes and apparatus may be implemented with any computing device. A computing device as used herein refers to any device with a processor, memory and a storage device that may execute instructions including, but not limited to, personal computers, server computers, computing tablets, set top boxes, video game systems, personal video recorders, telephones, personal digital assistants (PDAs), portable computers, and laptop computers. These computing devices may run an operating system, including, for example, variations of the Linux, Unix, MS-DOS, Microsoft Windows, Palm OS, Solaris, Symbian, and Apple Mac OS X operating systems.

The storage device 463 may be any storage device included with or otherwise coupled or attached to a computing device. Storage devices include hard disk drives, DVD drives, flash memory devices, and others. As used herein, a storage device is a device that allows for reading and/or writing to a storage medium. The storage device 463 may use a storage media to store program instructions which, when executed, cause the computing device to perform the processes and functions described herein. These storage media include, for example, magnetic media such as hard disks, floppy disks and tape; optical media such as compact disks (CD-ROM and CD-RW) and digital versatile disks (DVD and DVD±RW); flash memory cards; and other storage media.

The interface 468 may contain specialized circuits, firmware, and software to receive positional information 440 from sensors (not shown) such as the pelvis angle sensor, torso angle sensor, hip angle sensors, and knee angle sensors described in conjunction with FIG. 2 and FIG. 3. The interface 468 may include circuits to provide signals 480 to drive actuators (not shown) to provide force, vibration, or other mechanical feedback to an operator. The interface 468 may include circuits to perform amplification, filtering, interpolation, digital-to-analog conversion, analog-to-digital conversion and other processing of positional information and feedback signals.

The sound module 466 and audio transducer 467 may be used to generate audible sounds which may serve as feedback to the operator. The audio transducer 467 may be one of more loudspeakers or headphones. The display controller 469 and display 470 may be used to provide a visual image which may serve as feedback to the operator.

Description of Processes

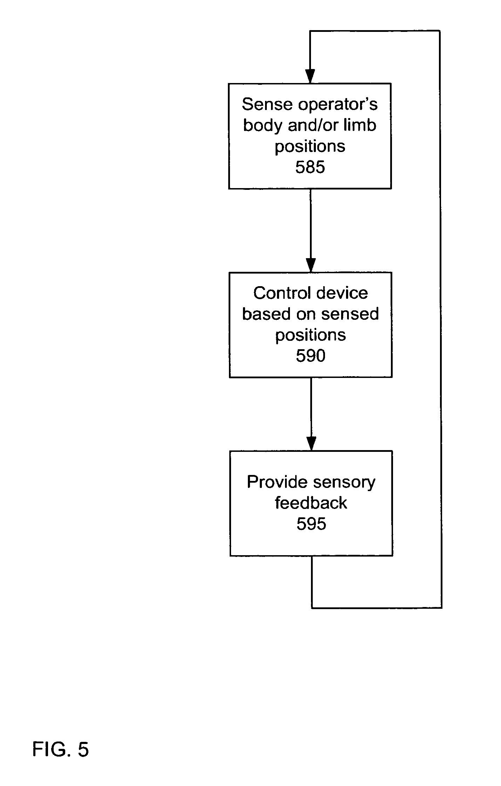

Referring now to FIG. 5, a method for controlling a device may include sensing positional information indicative of the positions of an operator's body or limbs (585); controlling the device, at least in part, with the positional information indicative of the positions of an operator's body or limbs (590); and providing sensory feedback to the operator (595). The sensed positional information may include the angle of the operator's pelvis in a frontal plane; the angle of the operator's torso in one, two, or three dimensions; the angles of the operator's thighs in one, two, or three dimensions; and the angles of the operator's knees in one or two dimensions. The sensed positional information may include the position or angle of additional portions of the operator's body.

Controlling the device may involve using the sensed positional information to determine specific parameters used to control the device. For example, if the device is a vehicle, the positional information indicative of the angle of the operator's pelvis may be used to control, at least in part, the steering of the vehicle. For further example, if the device is a simulation of a physical activity by a simulated person, the sensed positional information may be used to define the corresponding joints angles of the simulated person. The sensed positional information may be used to control other functions in other types of devices.

The sensory feedback provided to the operator may include visible images, audible sounds, and tactile sensations such as pressure, force, and vibration applied to portions of the operator's limbs or body. The feedback may be intrinsic, such as the scene through the window of a moving vehicle, the sounds of the tires and other portions of the moving vehicle, the physical effects of acceleration and vibration. The feedback may be synthetic, such as a visible image formed on a display device, synthesized sounds, and force vibration, and other tactile sensations provided by transducers coupled to the operator. The feed back may include a combination of intrinsic and synthesized effects.

Closing Comments

Throughout this description, the embodiments and examples shown should be considered as exemplars, rather than limitations on the apparatus and procedures disclosed or claimed. Although many of the examples presented herein involve specific combinations of method acts or system elements, it should be understood that those acts and those elements may be combined in other ways to accomplish the same objectives. With regard to flowcharts, additional and fewer steps may be taken, and the steps as shown may be combined or further refined to achieve the methods described herein. Acts, elements and features discussed only in connection with one embodiment are not intended to be excluded from a similar role in other embodiments.

For means-plus-function limitations recited in the claims, the means are not intended to be limited to the means disclosed herein for performing the recited function, but are intended to cover in scope any means, known now or later developed, for performing the recited function.

As used herein, "plurality" means two or more.

As used herein, a "set" of items may include one or more of such items.

As used herein, whether in the written description or the claims, the terms "comprising", "including", "carrying", "having", "containing", "involving", and the like are to be understood to be open-ended, i.e., to mean including but not limited to. Only the transitional phrases "consisting of" and "consisting essentially of", respectively, are closed or semi-closed transitional phrases with respect to claims.

Use of ordinal terms such as "first", "second", "third", etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

As used herein, "and/or" means that the listed items are alternatives, but the alternatives also include any combination of the listed items.

## Claims

1. A control system (200), comprising:
a seat (224) including:
a left seat (222L) and a right seat (222R) supported on respective suspension systems (224L, 224R) that allow independent vertical motion of the left and right seats, and
a pelvis angle sensor (242) to provide positional information indicative of the angle of an operator's pelvis in a frontal plane based on, the relative vertical positions of the left and right seats
a device (260) controlled, at least in part, by the positional information provided by the pelvis angle sensor.

2. The control system of claim 1, wherein
the controlled device is a vehicle
the positional information provided by the pelvis angle sensor is used to control, at least in part, the operation of the vehicle.

3. The control system of claim 2, wherein
the positional information provided by the pelvis angle sensor is used to control the steering of the vehicle.

4. The control system of claim 1, wherein
the controlled device is a computing device (460) running an application.
the positional information provided by the pelvis angle sensor controls, at least in part, the application.

5. The control system of claim 4, wherein
the application program is a simulation of a physical activity performed by a simulated person
the positional information provided by the pelvis angle sensor controls the pelvis angle of the simulated person.

6. The control system of claim 1, further comprising
at least one additional sensor selected from the group consisting of a torso angle sensor (244) to provide positional information indicative of the angle of the operator's torso on one, two, or three axis, thigh angle sensors (346L, 346R) to provide positional information indicative of the angles of the operator's thighs on one, two, or three axis, and knee angle sensors (348L, 348R) to provide positional information indicative of the angles of the operator's knees on one or two axis
wherein the positional information provided by the at least one additional sensor controls, at least in part, the device.

7. The control system of claim 4, further comprising a display device coupled to the computing device to provide feedback to the operator.

8. The control system of claim 1 wherein at least a portion of the seat is wearable.

9. A method for controlling a device (240), comprising:
providing a seat (200) for an operator, the seat including a left seat (222L) and a right seat (222R) supported on respective suspension systems (224L, 224R) that allow independent vertical motion of the left and right seats
sensing position information (585) indicative of an angle of an operator's pelvis in a frontal plane based on the relative vertical positions of the left and right seats
controlling the device (590), at least in part, with the positional information.

10. The method for controlling a device of claim 9, wherein
the device is a vehicle
controlling the device further comprises using the positional information to control, at least in part, the steering of the vehicle.

11. The method for controlling a device of claim 9, wherein
the controlled device is computing device running an application
controlling the device further comprises using the positional information to control, at least in part, the application,

12. The method for controlling a device of claim 11, wherein
the application is a simulation of a physical activity performed by a simulated person
the positional information is used to control the angle of the pelvis of the simulated person.

13. The method for controlling a device of claim 9, further comprising
sensing additional positional information with at least one sensor selected from the group consisting of a torso angle sensor to provide positional information indicative of the angle of the operator's torso on one, two, or three axis, thigh angle sensors to provide positional information indicative of the angles of the operator's thighs on one, two, or three axis, and knee angle sensors to provide positional information indicative of the angles of the operator's knees on one or two axis
using additional positional information to control, at least in part, the device.

14. The method for controlling a device of claim 9, further comprising
providing feedback to the operator
wherein the feedback provided to the operator includes at least one of the group consisting of an image on a display device, audible sounds, and tactile sensations.

## Patentansprüche

1. Steuerungssystem (200), umfassend:
einen Sitz (220), enthaltend:
einen linken Sitz (222L) und einen rechten Sitz (222R), die auf jeweiligen Federungssystemen (224L, 224R), die unabhängige vertikale Bewegung des linken und des rechten Sitzes gestatten, getragen werden, und
einen Beckenwinkelsensor (242) zum Bereitstellen von Positionsinformationen, die den Winkel eines Beckens eines Bedieners in einer vorderen Ebene basierend auf den relativen vertikalen Positionen des linken und des rechten Sitzes anzeigen,
eine Vorrichtung (260), die zumindest teilweise durch die Positionsinformationen, die von dem Beckenwinkelsensor bereitgestellt werden, gesteuert wird.

2. Steuerungssystem nach Anspruch 1, wobei
die gesteuerte Vorrichtung ein Fahrzeug ist,
die Positionsinformationen, die von dem Beckenwinkelsensor bereitgestellt werden, zumindest teilweise zum Steuern der Operation des Fahrzeugs verwendet werden.

3. Steuerungssystem nach Anspruch 2, wobei
die Positionsinformationen, die von dem Beckenwinkelsensor bereitgestellt werden, um Steuern der Lenkung des Fahrzeugs verwendet werden.

4. Steuerungssystem nach Anspruch 1, wobei
die gesteuerte Vorrichtung eine Rechenvorrichtung (460) ist, die eine Anwendung ausführt,
die Positionsinformationen, die von dem Beckenwinkelsensor bereitgestellt werden, zumindest teilweise die Anwendung steuern.

5. Steuerungssystem nach Anspruch 4, wobei
das Anwendungsprogramm eine Simulation der physikalischen Aktivität ist, die von einer simulierten Person ausgeführt wird,
die Positionsinformationen, die von dem Beckenwinkelsensor bereitgestellt werden, den Beckenwinkel der simulierten Person steuern.

6. Steuerungssystem nach Anspruch 1, weiter umfassend
mindestens einen zusätzlichen Sensor, der aus der Gruppe ausgewählt wird, bestehend aus einem Rumpfwinkelsensor (244) zum Bereitstellen von Positionsinformationen, die den Winkel des Rumpfes des Bedieners in einer, zwei oder drei Achsen anzeigen, Oberschenkelwinkelsensoren (346L, 346R) zum Bereitstellen von Positionsinformationen, die die Winkel der Oberschenkel des Bedieners in einer, zwei oder drei Achsen anzeigen, und Kniewinkelsensoren (348L, 348R) zum Bereitstellen von Positionsinformationen, die die Winkel der Knie des Bedieners in einer oder zwei Achsen anzeigen,
wobei die Positionsinformationen, die von dem mindestens einen zusätzlichen Sensor bereitgestellt werden, zumindest teilweise die Vorrichtung steuern.

7. Steuerungssystem nach Anspruch 4, weiter umfassend eine Anzeigevorrichtung, die an die Rechenvorrichtung gekoppelt ist, um Rückmeldung zu dem Bediener bereitzustellen.

8. Steuerungssystem nach Anspruch 1, wobei mindestens ein Teil des Sitzes tragbar ist.

9. Verfahren zum Steuern einer Vorrichtung (240), umfassend:
Bereitstellen eines Sitzes (220) für einen Bediener, der Sitz enthaltend einen linken Sitz (222L) und einen rechten Sitz (222R), die auf jeweiligen Federungssystemen (224L, 224R), die unabhängige vertikale Bewegung des linken und des rechten Sitzes gestatten, getragen werden,
Erfassen von Positionsinformationen (585), die einen Winkel eines Beckens eines Bedieners in einer vorderen Ebene basierend auf den relativen vertikalen Positionen des linken und des rechten Sitzes anzeigen
Steuern der Vorrichtung (590) zumindest teilweise mit den Positionsinformationen.

10. Verfahren zum Steuern einer Vorrichtung nach Anspruch 9, wobei
die Vorrichtung ein Fahrzeug ist,
Steuern der Vorrichtung weiter umfasst, die Positionsinformationen zumindest teilweise zum Steuern der Lenkung des Fahrzeugs zu verwenden.

11. Verfahren zum Steuern einer Vorrichtung nach Anspruch 9, wobei
die gesteuerte Vorrichtung eine Rechenvorrichtung ist, die eine Anwendung ausführt,
Steuern der Vorrichtung weiter umfasst, die Positionsinformationen zumindest teilweise zum Steuern der Anwendung zu verwenden.

12. Verfahren zum Steuern einer Vorrichtung nach Anspruch 11, wobei
die Anwendung eine Simulation einer physikalischen Aktivität ist, die von einer simulierten Person ausgeführt wird,
die Positionsinformationen zum Steuern des Beckenwinkels der simulierten Person verwendet werden.

13. Verfahren zum Steuern einer Vorrichtung nach Anspruch 9, weiter umfassend
Erfassen zusätzlicher Positionsinformationen mit mindestens einem Sensor, der aus der Gruppe ausgewählt wird, bestehend aus einem Rumpfwinkelsensor zum Bereitstellen von Positionsinformationen, die den Winkel des Rumpfes des Bedieners in einer, zwei oder drei Achsen anzeigen, Oberschenkelwinkelsensoren zum Bereitstellen von Positionsinformationen, die die Winkel der Oberschenkel des Bedieners in einer, zwei oder drei Achsen anzeigen, und Kniewinkelsensoren zum Bereitstellen von Positionsinformationen, die die Winkel der Knie des Bedieners in einer oder zwei Achsen anzeigen
Verwenden zusätzlicher Positionsinformationen, um zumindest teilweise die Vorrichtung zu steuern.

14. Verfahren zum Steuern einer Vorrichtung nach Anspruch 9, weiter umfassend
Bereitstellen von Rückmeldung zu dem Bediener,
wobei die dem Bediener bereitgestellte Rückmeldung mindestens eines aus der Gruppe enthält, bestehend aus einem Bild auf einer Anzeigevorrichtung, hörbaren Tönen und fühlbaren Empfindungen.

## Revendications

1. Système de commande (200), comprenant :
un siège (220) comprenant :
un siège gauche (222L) et un siège droit (222R) supportés sur des systèmes de suspension (224L, 224R) respectifs qui permettent un mouvement vertical indépendant des sièges gauche et droit, et
un capteur d'angle de bassin (242) pour fournir des informations de position indicatives de l'angle du bassin d'un opérateur dans un plan frontal sur la base des positions verticales relatives des sièges gauche et droit,
un dispositif (260) commandé, au moins en partie, par les informations de position fournies par le capteur d'angle de bassin.

2. Système de commande selon la revendication 1, dans lequel
le dispositif commandé est un véhicule,
les informations de position fournies par le capteur d'angle de bassin sont utilisées pour commander, au moins en partie, le fonctionnement du véhicule.

3. Système de commande selon la revendication 2, dans lequel
les informations de position fournies par le capteur d'angle de bassin sont utilisées pour commander le braquage du véhicule.

4. Système de commande selon la revendication 1, dans lequel
le dispositif commandé est un dispositif informatique (460) exécutant une application,
les informations de position fournies par le capteur d'angle de bassin commandent, au moins en partie, l'application.

5. Système de commande selon la revendication 4, dans lequel
le programme d'application est une simulation d'une activité physique effectuée par une personne simulée,
les informations de position fournies par le capteur d'angle de bassin commandent l'angle de bassin de la personne simulée.

6. Système de commande selon la revendication 1, comprenant en outre :
au moins un capteur supplémentaire sélectionné dans le groupe consistant en un capteur d'angle de torse (244) pour fournir des informations de position indicatives de l'angle du torse de l'opérateur sur un, deux, ou trois axes, des capteurs d'angle de cuisse (346L, 346R) pour fournir des informations de position indicatives des angles des cuisses de l'opérateur sur un, deux, ou trois axes, et des capteurs d'angle de genou (348L, 348R) pour fournir des informations de position indicatives des angles des genoux de l'opérateur sur un ou deux axes,
dans lequel les informations de position fournies par ledit au moins un capteur supplémentaire commandent, au moins en partie, le dispositif.

7. Système de commande selon la revendication 4, comprenant en outre un dispositif d'affichage couplé au dispositif informatique pour fournir une rétroaction à l'opérateur.

8. Système de commande selon la revendication 1, dans lequel au moins une partie du siège peut être portée.

9. Procédé pour commander un dispositif (240), consistant à :
fournir un siège (200) pour un opérateur, le siège comprenant un siège gauche (222L) et un siège droit (222R) supportés sur des systèmes de suspension (224L, 224R) respectifs qui permettent un mouvement vertical indépendant des sièges gauche et droit,
détecter des informations de position (585) indicatives d'un angle du bassin d'un opérateur dans un plan frontal sur la base des positions verticales relatives des sièges gauche et droit,
commander le dispositif (590), au moins en partie, avec les informations de position.

10. Procédé pour commander un dispositif selon la revendication 9, dans lequel
le dispositif est un véhicule,
la commande du dispositif comprend en outre l'utilisation des informations de position pour commander, au moins en partie, le braquage du véhicule.

11. Procédé pour commander un dispositif selon la revendication 9, dans lequel
le dispositif commandé est un dispositif informatique exécutant une application,
la commande du dispositif comprend en outre l'utilisation des informations de position pour commander, au moins en partie, l'application.

12. Procédé pour commander un dispositif selon la revendication 11, dans lequel
l'application est une simulation d'une activité physique effectuée par une personne simulée,
les informations de position sont utilisées pour commander l'angle du bassin de la personne simulée.

13. Procédé pour commander un dispositif selon la revendication 9, consistant en outre à :
détecter des informations de position supplémentaires avec au moins un capteur sélectionné dans le groupe consistant en un capteur d'angle de torse pour fournir des informations de position indicatives de l'angle du torse de l'opérateur sur un, deux, ou trois axes, des capteurs d'angle de cuisse pour fournir des informations de position indicatives des angles des cuisses de l'opérateur sur un, deux, ou trois axes, et des capteurs d'angle de genou pour fournir des informations de position indicatives des angles des genoux de l'opérateur sur un ou deux axes,
utiliser les informations de position supplémentaires pour commander, au moins en partie, le dispositif.

14. Procédé pour commander un dispositif selon la revendication 9, consistant en outre à :
fournir une rétroaction à l'opérateur,
dans lequel la rétroaction fournie à l'opérateur comprend au moins l'un du groupe consistant en une image sur un dispositif d'affichage, des sons audibles et des sensations tactiles.
